# DEMANDE DE BREVET EUROPEEN

(11) **EP 1 016 516 A1**
(43) Date de publication de la demande: **05.07.2000**
(21) Numéro de dépôt: 99403305.8
(22) Date de dépôt: 28.12.1999
(51) Int. Cl.: B29D 9/00, B32B 15/08, B32B 27/08, C23C 18/16

(54) **Pièce composite présentant une surface libre partiellement métallisée et son procédé de préparation**

(30) Priorité: 28.12.1998 FR 9816501
(71) Demandeur: Toly Products (France), 75008 Paris (FR)
(72) Inventeur: Portner, Jean-Claude, 91260 Juvisy sur Orge (FR)
(74) Mandataire: Le Guen, Gérard

(57) **Abrégé**

Pièce composite moulée présentant une surface libre partiellement métallisée, caractérisée en ce qu'elle est composée d'au moins une matière plastique chimiquement métallisée et d'un matériau plastique non métallisable chimiquement, ledit matériau thermoplastique et non métallisable chimiquement comprenant au moins
- un polycarbonate thermoplastique et
- un copolyester thermoplastique
avec lesdits polycarbonate et copolyester présents dans un rapport pondéral approprié à l'ajustement de la température de transformation dudit matériau à une valeur comprise entre 190 et 310°C. La présente invention a également pour objet le procédé de sa préparation.

## Description

La présente invention a pour objet un matériau plastique non métallisable lors de la réalisation d'objets composites à revêtement métallique sélectif, les objets composites ainsi obtenus et un procédé de préparation desdits objets.

La présente invention concerne le domaine des revêtements métalliques, en particulier les revêtements décoratifs sur des pièces généralement en matière plastiques, pour leur conférer en surface un aspect métallisé sélectif. Ce type de pièces, qui présentent des surfaces métallisées sur des zones parfaitement délimitées, est tout particulièrement recherché dans les industries de la cosmétique et de la parfumerie à titre de modes de conditionnement.

Par ailleurs, ce type de matériau est également utile pour des applications visant à mettre à profit la conductibilité électrique des métaux et l'isolation des matières plastiques comme dans le domaine de la télécommunication.

L'une des techniques de métallisation des matières plastiques les plus employées est celle proposée par la société Shipley et connue sous le nom procédé Shipley P.O.P. On réalise la métallisation des matières plastiques en continu, par électrolyse en milieu aqueux, après conditionnement chimique de la surface dans sa totalité. Il est clair que l'application de ce type de technique à la métallisation partielle d'une pièce plastique implique soit de préserver au préalable les zones que l'on ne souhaite pas métalliser puis de les restituer à l'issue du procédé de métallisation soit d'éliminer après traitement ledit revêtement métallique des zones ou surfaces que l'on souhaite exposer sans dépôt métallique.

Ces démarches ne sont pas satisfaisantes sur le plan industriel dans la mesure où elles impliquent des manipulations supplémentaires et qui de plus sont délicates à exécuter. Par ailleurs, on perd le bénéfice d'un procédé de production en continu, sans changement de montage.

Plus récemment, il a été proposé d'associer dans une pièce moulée deux types de matériaux plastiques, l'un métallisable chimiquement et l'autre non métallisable (FR 2 669 576). Préalablement à la métallisation, on prépare la pièce plastique à partir du mélange correspondant selon des techniques de moulage classiques comme la technique de surmoulage, de compression, d'insert ou de bi-injection. La pièce moulée ainsi préparée peut être ensuite métallisée sélectivement de manière continu.

Toutefois, cette solution n'est pas totalement satisfaisante dans la mesure où son application soulève des problèmes de fiabilité et parfois de dégradation en particulier au niveau de la matière plastique non métallisable chimiquement.

La présente invention a précisément pour objet de proposer un nouveau matériau plastique non métallisable lors de la réalisation d'objets composites à revêtement métallique sélectif.

En fait, il apparaît que ce matériau plastique non sujet à la métallisation, se doit en outre de répondre à l'ensemble des exigences suivantes :
- il doit être inerte en milieu fortement alcalin, en milieu fortement acide et en milieu fortement oxydant,
- il doit être miscible dès sa température de fusion (ou température de transformation) avec le matériau plastique métallisable de manière à obtenir une soudure homogène des deux matériaux et prévenir ainsi tout phénomène de retrait lors du démoulage de la pièce composite correspondante,
- la température de transformation du matériau non métallisable doit pouvoir s'ajuster aux conditions de transformation du matériau plastique chimiquement métallisable et
- le matériau non métallisable doit pouvoir offrir toutes les possibilités de coloration et de transparence.

La difficulté rencontrée et résolue dans le cadre de la présente invention, porte précisément sur l'obtention d'un matériau plastique non métallisable qui puisse posséder simultanément les propriétés évoquées ci-dessus.

De manière inattendue, l'inventeur a mis en évidence qu'il était possible de satisfaire à l'ensemble de ces exigences en réalisant un alliage plastique non métallisable qui associe au moins deux types de matériaux plastiques non métallisables.

Plus précisément, la présente invention a pour premier objet un matériau thermoplastique, non métallisable chimiquement caractérisé en ce qu'il comprend au moins
- un polycarbonate thermoplastique et
- un copolyester thermoplastique,
et en ce que lesdits polycarbonate et copolyester sont présents dans un rapport pondéral approprié à l'ajustement de la température de transformation dudit matériau à une valeur comprise entre 190°C et 310°C.

Conviennent plus particulièrement à l'invention, les copolyesters dérivant de la famille des téréphtalates de polyalkylène en C₂ à C₈ et plus préférentiellement ceux dérivant des terephtalates de polyéthylène.

A titre représentatif des copolyesters convenant à l'invention, on peut notamment citer les PCTA (Polycyclohexylènediméthylène téréphtalate modifié par les acides téréphtalique et isophtalique), PCTG (Poly(1,4 cyclohexylènediméthylène terephtalate)), PBT (téréphtalate de polybutylène) et PET (téréphtalate de polyéthylène) et analogues.

Plus préférentiellement, il s'agit du PCTG et/ou du PCTA.

L'association d'un copolyester à un polycarbonate est avantageuse à plusieurs titres :
- Tout d'abord, elle est particulièrement intéressante en terme de résistance chimique pour le matériau non métallisable revendiqué. En effet, ce dernier bénéficie d'une part de la résistance chimique du polycarbonate aux agents alcalins ou acides et d'autre part de la bonne tenue chimique du copolyester ainsi que de la résistance de ce dernier aux alcalins et aux solvants.
- Par ailleurs, le polycarbonate et le copolyester possèdent des structures chimiques extrêmement compatibles et donc sont parfaitement miscibles. Il en découle une homogénéité réelle au niveau de leurs alliages.
- Les natures des chaînes chimiques du polycarbonate et du copolyester confèrent audits alliages une excellente résistance chimique à l'oxydation et aux acides et ne sont pas propices à la création de sites catalytiques, précurseurs de la métallisation. En conséquence, le matériau revendiqué est particulièrement intéressant pour son inertie lors de la métallisation.
- Enfin, la combinaison d'un polycarbonate et d'un copolyester au sein du matériau thermoplastique revendiqué permet de bénéficier d'une plage de températures de transformation étendue pour ledit matériau. Il s'avère en effet possible de régler la température de transformation des alliages correspondants en ajustant les quantités respectives des deux composés. Cette option est particulièrement intéressante pour l'association de ces alliages avec un matériau non métallisable puisqu'elle permet de régler la température de transformation de ce type d'alliages à une valeur compatible avec celle du matériau plastique métallisable. On peut ainsi s'affranchir des phénomènes de retraits susceptibles d'intervenir au niveau de la soudure entre les deux matériaux, métallisable et non métallisable, et qui généralement sont provoqués par une différence de températures trop importante entre les deux matériaux lors de leur mise en contact. En conséquence, l'utilisation d'un alliage conforme à la présente invention garantit une excellente cohésion au niveau de la structure de la pièce.

C'est ainsi qu'un mélange de polycarbonate et de PCTA dans rapport pondéral 50/50 possède une température de transformation de l'ordre de 260°C +/- 10°C contre 245 °C +/- 10°C pour un mélange de polycarbonate et de PCTA dans rapport pondéral 25/75.

Les propriétés du matériau évoquées ci-dessus sont donc particulièrement avantageuses en termes de fiabilité et de reproductibilité en production pour préparer des pièces moulées plastiques partiellement métallisées.

La présente invention a pour second objet une pièce composite moulée présentant une surface libre partiellement métallisée, caractérisée en ce qu'elle est composée d'au moins une matière plastique chimiquement métallisée et d'un matériau plastique non métallisable chimiquement tel que défini ci-dessus.

Cette pièce composite moulée est obtenue par moulage successif de ses deux matériaux puis métallisation de sa surface.

Comme matière chimiquement métallisable conviennent notamment à l'invention les matières thermoplastiques choisies parmi l'ABS et ses alliages.

On peut notamment utiliser des matières thermoplastiques du type Terluran®, qui est un ABS sous forme de granulés produit par la société BASF, ou Novodur® qui est un ABS produit par la société BAYER FRANCE.

Ces matières plastiques sont en particulier propices à l'obtention de surfaces microporeuses hydrophiles. La création de ce type de surfaces est en effet une étape déterminante dans le processus de métallisation chimique et l'obtention de surfaces sélectives. Elles sont généralement obtenues par oxydation ou dissolution chimique dans des milieux d'attaque chimique spécifiques. Le matériau plastique non métallisable revendiqué est avantageusement résistant à ce type d'attaque.

La surface métallisée des pièces composites comprend au moins un métal de base choisi parmi le cuivre ou le nickel qui est donc généralement déposé par voie chimique. On peut également envisagé dans le cadre de la présente invention que cette surface métallisée dérive de la superposition à un premier métal de base d'un second film métallique. Ce second film métallique peut être choisi parmi les métaux suivants : cuivre, nickel, chrome, or, platine, palladium rhodium, ruthénium, argent, zinc, cobalt ou un de leurs alliages.

En fait, le choix du métal est généralement opéré en fonction de l'aspect final recherché. Par exemple le cuivre donne un fini brillant ou semi brillant quant au nickel, il conduit à un fini brillant, mat ou d'aspect velours.

Le matériau plastique métallisable chimiquement et le matériau plastique non métallisable revendiqué selon l'invention peuvent bien entendu être associés dans des proportions très variables généralement dictées par l'aspect final recherché pour la pièce composite. En revanche, le choix du ou des copolyesters et les proportions en polycarbonate et copolyester au sein du composant plastique non métallisable sont ajustées de manière à ce que les deux matériaux plastiques, à savoir métallisable et non métallisable, puissent être transformés à des températures optimisées pour conférer une excellente cohésion à la pièce qu'ils constituent.

La présente invention a pour troisième objet un procédé de préparation d'une pièce composite moulée présentant une surface libre partiellement métallisée à partir d'au moins une matière plastique métallisable et d'un matériau non métallisable tel que défini ci-dessus caractérisé en ce que :
a) on moule une première matière plastique à une première température de transformation,
b) au niveau de la pièce intermédiaire ainsi obtenue, on surmoule la seconde matière plastique à une seconde température de transformation de façon à créer un décor de surface sur la pièce définitive, avec la température de transformation du matériau non métallisable selon l'invention ayant été réglée à une température compatible avec sa soudure à la matière plastique métallisable par ajustement préalable du rapport pondéral de son mélange polycarbonate/copolyester,
c) on démoule le matériau composite obtenu,
d) on conditionne sélectivement la surface de la matière plastique métallisable par création d'une surface microporeuse hydrophile par oxydation ou dissolution chimique,
e) on dépose des particules de catalyseur de métallisation sur ladite surface microporeuse hydrophile et
f) on métallise chimiquement par voie humide, sélectivement ladite surface microporeuse hydrophile.

Le procédé revendiqué implique donc, préalablement à la métallisation, deux étapes de moulages successives pour mettre en forme les deux matériaux plastiques considérés.

L'ordre de réalisation de ces opérations de moulage est simplement dicté par les quantités respectives des composants métallisable et non métallisable dans la pièce composite, le matériau plastique prédomminant étant moulé en priorité.

En effet, pour des raisons évidentes de cohésion, il est préférable de mouler au préalable la matière plastique prépondérante soit par injection ou compression dans une première forme et d'effectuer ensuite le moulage de la seconde matière plastique.

En revanche, lorsque les deux types de matériaux sont en quantités équivalentes, leur ordre de moulage n'est pas déterminant.

En fait, la valeur de la température de transformation du matériau non métallisable est liée à la proportion pondérale de ce matériau dans la pièce composite.

Lorsque le matériau non métallisable et le matériau métallisable sont dans des proportions équivalentes, la température de transformation du matériau non métallisable est ajustée à une valeur proche de la température fixée pour la matière plastique métallisable à ± 15 %.

En revanche, lorsque les deux matériaux, métallisable et non métallisable, sont dans des proportions non équivalentes, il est nécessaire de prendre en considération les échanges caloriques qui vont se manifester au niveau de leur contact. La température de transformation du matériau non métallisable est alors ajustée de manière à compenser ce phénomène d'échange calorique.

Ainsi, lorsque le matériau non métallisable est en proportion minoritaire, il est moulé consécutivement à la matière plastique métallisable et avec une température de transformation supérieure d'environ 30 à 50°C à la température de transformation fixée pour la matière plastique métallisable.

Par contre, lorsque ce matériau non métallisable est en proportion majoritaire, il est moulé préliminairement à la matière plastique métallisable et avec une température de transformation inférieure d'environ 30 à 50°C à la température de transformation fixée pour la matière plastique métallisable.

La température de transformation fixée pour la matière plastique métallisable peut être soit la température de transformation intrinsèque soit une température supérieure. En effet, il peut être possible de transformer ladite matière plastique métallisable à une température supérieure à sa température de transformation ce qui permet également d'ajuster l'écart de températures, entre cette matière plastique et le matériau non métallisable, dans les plages préconisées ci-dessus. La matière plastique est de préférence choisie parmi l'ABS et ses alliages.

Par exemple dans le cas où le matériau métallisable retenu est l'ABS dont la température de transformation est de l'ordre de 240°C, lorsque celui-ci est majoritaire, le matériau non métallisable retenu est un mélange de PCTG/PC dont la température de transformation de ce mélange est ajusté à 285°C en utilisant 20 parties de PCTG pour 80 parties de PC.

En revanche, dans le cas où les deux matériaux sont en quantités équivalente avec l'ABS étant le matériau métallisable, on utilise un mélange PC/PCTA/PCTG, dont la température de transformation est ajustée à 240°C en utilisant 80 parties de PCTA pour 10 parties de PCTG et 10 parties PC.

Les exemples figurant ci-après rendent compte de manière détaillée d'autres variantes de matériaux revendiqués et dont les températures de transformation sont ajustées à travers le choix du ou des polyesters qui les composent et leurs proportions respectives dans lesdits matériaux.

Les opérations de moulage sont effectuées selon des techniques classiques telles celles évoquées ci-dessus comme la technique d'injection ou de compression.

Le procédé consiste à réaliser deux formes de moule complémentaires et distinctes.

Par exemple dans un premier temps, on moule la première matière non métallisable par injection ou compression dans la première forme. On effectue une rotation du moule et on fait suivre la deuxième matière métallisable par injection ou compression dans la deuxième forme.

Le choix peut être inversé afin par exemple de mouler en premier la matière métallisable et en second la matière non métallisable.

La qualité du moulage est un des facteurs primordiaux d'une bonne métallisation du plastique. En effet, des normes doivent être respectée : par exemple, les agents de démoulage doivent être proscrits.

Les surfaces microporeuses obtenues par oxydation ou dissolution chimique permettent la création de sites catalytiques conduisant au dépôt chimique de cuivre ou de nickel.

Dans ces pores activés par catalyse, les dépôts de cuivre ou de nickel peuvent s'ancrer fortement et permettent l'obtention de valeurs d'adhérence élevées des dépôt métalliques réalisés.

La qualité de définition entre la surface métallisable microporeuse après attaque chimique et la surface non métallisable est définie par la valeur de l'angle alpha (a) à l'interface solide/liquide. Bien sûr les paramètres qui régulent les propriétés de mouillabilité de la matière métallisable et l'hydrophobie de la matière non métallisable sont réglés par l'ajustage des milieux du traitement chimique.

De préférence, après l'étape e) et avant l'étape f) on fait agir sur la surface microporeuse un accélérateur de métallisation.

Cet accélérateur, par exemple PM 964®, commercialisé par la société Shipley, accélère le dépôt initial du métal, protège le bain de métallisation contre les entraînements de catalyseur, empêche la métallisation des montages. L'accélérateur PM 964® du procédé Shipley a été mis au point spécialement pour la métallisation des ABS et des qualités spécialement adaptés de polypropylène.

Selon un des aspects de l'invention, le catalyseur de l'étape e) est constitué par des colloïdes de palladium et d'étain déposés dans les pores de ladite surface qui sont ainsi activés.

Ce catalyseur dépose sur la surface les particules de palladium et d'étain nécessaires à la fixation ultérieure du métal. Cette catalyse doit être absolument uniforme pour permettre un brillant miroir exempt de piqûre et de grain.

Généralement, à l'étape f) on métallise par électrolyse dans un bain contenant du nickel ou du cuivre.

La présente invention concerne également un procédé d'obtention d'une pièce moulée présentant une surface libre partiellement métallisée tel qu'il a été défini ci-dessus, caractérisé en ce qu'un second film métallique de finition est déposé sur la surface métallisée chimiquement.

Dans un mode de réalisation du procédé de préparation d'une pièce composite moulée présentant une surface libre partiellement métallisée, après démoulage de la pièce en matériau composite, on procède à une métallisation par voie humide avec la gamme chimique suivante, dite "gamme chimique" des thermoplastiques et thermodurcissables (P.O.P Shipley par exemple).

Le procédé P.O.P de Shipley Company est décrit de manière détaillée dans le brevet FR 2 669 576 auquel on pourra se reporter.

En ce qui concerne plus particulièrement la technique de métallisation directe dite Direct Plating de la Société Leal Ronal, elle implique successivement des étapes de nettoyage (dégraissage et rinçage), gravure chimique oxydante, sulfo-chimique, rinçage, neutralisation chimique, pré-immersion, catalysation spéciale D.P (colloïde uniquement), accélérateur-convertisseur Etain/cuivre, rinçage, stabilisation et phase électrolytiques. Pour une description plus détaillée dudit protocole, on peut se reporter à la notice Ronapop DP de la Société Leal Ronal.

En fait, l'ensemble des opérations évoquées ci-dessus et qui sont nécessaires à la réalisation de la métallisation relèvent des compétences de l'homme de l'art.

Les exemples et figures soumis ci-après sont présentés à titre illustratif et non limitatif de la présente invention.

Ils sont illustrés par les dessins sur lesquels :

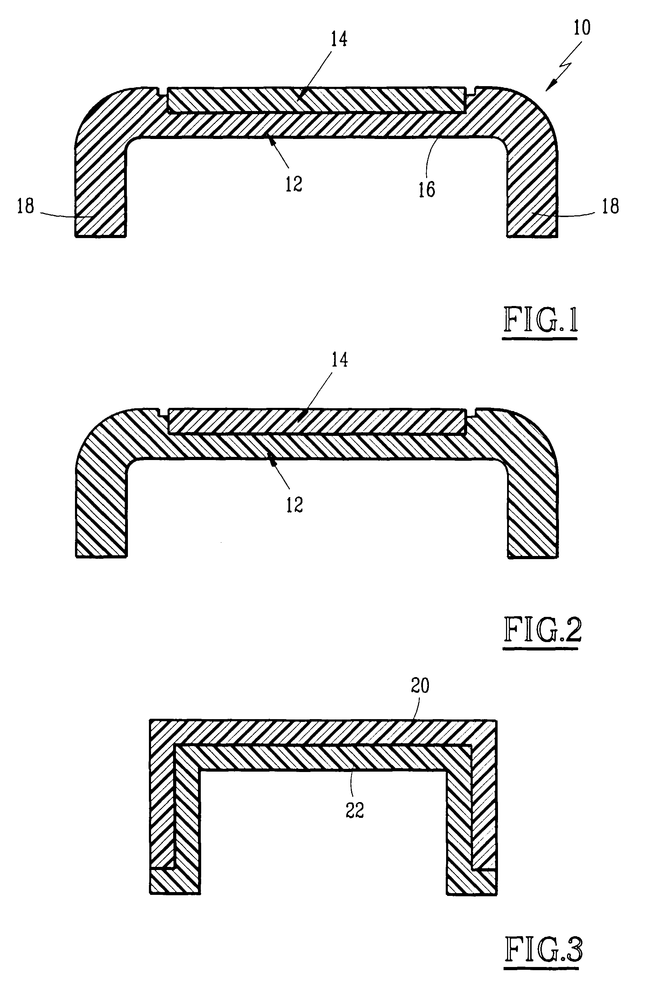

- la figure 1 est une vue en section d'une pièce moulée dans laquelle la matière plastique métallisable chimiquement est majoritaire ;
- la figure 2 est une vue en section d'une pièce moulée dans laquelle la matière plastique non métallisable chimiquement est majoritaire,
- la figure 3 est une vue en section d'une pièce moulée dans laquelle les quantités de matières plastiques métallisable et non métallisable sont sensiblement égales.

### MATERIELS

Dans les exemples qui suivent sont utilisés à titre de polyesters les PCTG et/ou PCTA, le PC (polycarbonate) et à titre de matériau métallisable l'ABS. Les températures de transformation de ces matériaux sont les suivantes :

| | | |
|---|---|---|
| ABS = | 210-265°C | optimum = 240°C ± 10 % |
| PCTG = | 240-290°C | optimum = 265°C ± 10 % |
| PCTA = | 190-250°C | optimum = 230°C ± 10 % |
| PC = | 260-310°C | optimum = 290°C ± 10 % |

### EXEMPLE 1

Dans cet exemple, la pièce composite moulée est un couvercle 10 de boîtier pour le conditionnement de produits cosmétiques. Elle présente un corps 12 sur la face exposée duquel est prévue une plaque de parement 14. Le corps 12 présente une paroi principale 16 bordée par des parois latérales 18. La plaque de parement 14 s'étend sur une région centrale réduite de la surface exposée de la paroi principale 16 à laquelle elle affleure.

Le corps 12 est réalisé dans une matière plastique métallisable chimiquement alors que la plaque de parement 14 est réalisée dans une matière plastique non métallisable chimiquement.

Ainsi, la matière plastique métallisable chimiquement est majoritaire et la matière plastique non métallisable chimiquement est minoritaire.

On utilise à titre de matière plastique métallisable l'ABS qui est donc moulé en premier.

Pour ce qui est de la matière plastique non métallisable, on met en oeuvre deux types de composition.

Dans une première composition référencée ① on mélange 20 parties de PCTG et 80 parties de PC.

Dans la seconde composition dite ② on mélange 30 parties de PCTA et 70 parties de PC.

Dans le cas de la réalisation de la pièce moulée à base de l'ABS et de la composition ① on utilise des températures de transformation respectives de 240°C pour l'ABS et de 285°C pour la composition ①.

Pour ce qui est de la pièce moulée obtenue à partir du mélange de l'ABS et de la composition ② on utilise 230°C comme température de transformation pour la matière ABS et 272°C pour la transformation de la composition ②.

Les échanges thermiques sont donc assurés pour chacune des deux pièces moulées avec un écart de 40°C à 45°C.

### EXEMPLE 2

Dans ce deuxième exemple, la pièce composite moulée est de forme et de structure analogue à celle du premier exemple. Toutefois, le corps 12 est réalisé dans une matière plastique non métallisable chimiquement alors que la plaque de parement 14 est réalisée dans une matière plastique métallisable.

Ainsi, la matière plastique métallisable chimiquement est minoritaire et la matière plastique non métallisable chimiquement est majoritaire.

Par analogie à l'exemple 1 la matière plastique métallisable chimiquement est l'ABS. Dans ce cas le composé non métallisable est moulé au préalable et le composé métallisable est transformé consécutivement.

La composition du matériau non métallisable retenu dans le cas de cet exemple est :

PCTA 60 parties et PC 40 parties.

La température de transformation de cette composition est 218°C.

Pour obtenir une pièce moulée obtenue à partir de l'ABS et de ladite composition, on réalise successivement le moulage de l'alliage PCTA-PC à une température de 218°C puis celui de l'ABS à une température de 260°C. L'échange thermique est donc assuré avec un écart de 42°C.

### EXEMPLE 3

Dans ce troisième exemple, la pièce composite est un couvercle en forme de cloche comportant sur l'essentiel de sa surface deux couches adjacentes, l'une externe notée 20, et l'autre interne notée 22.

Les deux couches ont la même épaisseur. L'une des couches est réalisée en une matière plastique métallisable chimiquement alors que l'autre couche est réalisée en une matière plastique non métallisable chimiquement.

Ainsi, la quantité de matière plastique métallisable chimiquement est sensiblement égale à la quantité de matière plastique non métallisable en volume ou en poids.

La matière plastique métallisable est également l'ABS.

Pour ce qui est des compositions non métallisables il s'agit des suivantes :
① PCTG = 80 parties, PC = 20 parties pour une température de transformation de 270°C,
② PCTA = 60 parties, PC = 40 parties pour une température de transformation de 254°C,
③ PCTG = 10 parties, PC = 10 parties, PCTA = 80 parties pour une température de transformation de 240°C.

Dans le cas de la composition ① on procède au moulage de l'ABS à une température de 240°C et à celui de l'alliage à 270°C.

Dans le cas de la composition ② le moulage de l'ABS est effectué à une température de 220°C et celui de l'alliage à une température de 254°C.

Quant à la troisième composition, elle est moulée à une température de 250°C et associée à de l'ABS lui-même moulé à une température de 220°C.

Ces trois modes de réalisations montrent donc qu'il est possible de réaliser des moulages avec des écarts de température de transformation de l'ordre de 20°C à 34°C c'est-à-dire de l'ordre de 10 à 15 %.

## Revendications

1. Pièce composite moulée présentant une surface libre partiellement métallisée, caractérisée en ce qu'elle est composée d'au moins une matière plastique chimiquement métallisée et d'un matériau plastique non métallisable chimiquement, ledit matériau thermoplastique et non métallisable chimiquement comprenant au moins
- un polycarbonate thermoplastique et
- un copolyester thermoplastique,
avec lesdits polycarbonate et copolyester présents dans un rapport pondéral approprié à l'ajustement de la température de transformation dudit matériau à une valeur comprise entre 190 et 310°C.

2. Pièce composite moulée selon la revendication 1, caractérisée en ce que le copolyester dérive d'un téréphtalate de polyalkylène en C₂ à C₈.

3. Pièce composite moulée selon la revendication 1 ou 2, caractérisée en ce que le copolyester est choisi parmi les PCTA, PCTG, PBT et PET et analogues.

4. Pièce composite moulée selon l'une des revendications 1 à 3, caractérisée en ce que le copolyester est le PCTA et/ou le PCTG.

5. Pièce composite moulée selon l'une des revendications 1 à 4, caractérisée en ce que la matière plastique chimiquement métallisée est une matière thermoplastique choisie parmi l'ABS et ses alliages.

6. Pièce composite moulée selon l'une des revendications 1 à 5, caractérisée en ce qu'elle est obtenue par moulage successif de ses deux matériaux puis métallisation de sa surface.

7. Pièce composite moulée selon l'une des revendications 1 à 6, caractérisée en ce que la surface métallisée comprend au moins un métal de base choisi parmi le cuivre ou le nickel déposé par voie chimique.

8. Pièce composite moulée selon l'une des revendications 1 à 7, caractérisée en ce que la surface métallisée comprend superposé à un premier métal de base, un second film métallique.

9. Procédé de préparation d'une pièce composite moulée présentant une surface libre partiellement métallisée à partir d'au moins une matière plastique métallisable et d'un matériau thermoplastique et non métallisable chimiquement comprenant au moins
- un polycarbonate thermoplastique et
- un copolyester thermoplastique,
avec lesdits polycarbonate et copolyester présents dans un rapport pondéral approprié à l'ajustement de la température de transformation dudit matériau à une valeur comprise entre 190 et 310°C, caractérisé en ce que :
a) on moule une première matière plastique à une première température de transformation,
b) au niveau de la pièce intermédiaire ainsi obtenue, on surmoule la seconde matière plastique à une seconde température de transformation de façon à créer un décor de surface sur la pièce définitive avec
la température de transformation du matériau non métallisable ayant été réglée à une température compatible avec sa soudure à la matière plastique métallisable par ajustement préalable du rapport pondéral de son mélange polycarbonate/copolyester,
c) on démoule le matériau composite obtenu,
d) on conditionne sélectivement la surface de la matière plastique métallisable par création d'une surface microporeuse hydrophile par oxydation ou dissolution chimique,
e) on dépose des particules de catalyseur de métallisation sur ladite surface microporeuse hydrophile et
f) on métallise chimiquement par voie humide, sélectivement ladite surface microporeuse hydrophile.

10. Procédé selon la revendication 9, caractérisé en ce que le matériau non métallisable est présent en quantité équivalente à la matière plastique métallisable et en ce que sa température de transformation est égale à ±15 % à la température de transformation fixée pour la matière plastique métallisable.

11. Procédé selon la revendication 9, caractérisé en ce que le matériau non métallisable est en proportion minoritaire, est moulé consécutivement à la matière plastique métallisable et en ce que sa température de transformation est supérieure de 30°C à 50°C à la température de transformation fixée pour la matière plastique métallisable.

12. Procédé selon la revendication 9, caractérisé en ce que le matériau non métallisable est en proportion majoritaire, est moulé préliminairement à la matière plastique métallisable et en ce que sa température de transformation est inférieure à 30°C à 50°C à la température de transformation fixée par la matière plastique métallisable.

13. Procédé selon l'une des revendications 9 à 12, caractérisé en ce que la matière plastique métallisable est choisi parmi l'ABS et ses alliages.

14. Procédé selon l'une des revendications 9 à 13, caractérisé en ce qu'après l'étape e) et avant l'étape f) on fait agir sur la surface microporeuse un accélérateur de métallisation.

15. Procédé selon l'une des revendications 9 à 14, caractérisé en ce qu'un second film métallique de finition est déposé sur la surface métallisée chimiquement.

16. Procédé selon l'une des revendications 9 à 15, caractérisé en ce que le catalyseur de l'étape e) est constitué par des colloïdes de palladium et d'étain déposés dans les pores de ladite surface qui sont ainsi activés.

17. Procédé selon l'une des revendications 9 à 16, caractérisé en ce qu'à l'étape f) on métallise par électrolyse dans un bain contenant du nickel ou du cuivre.
